# EUROPEAN PATENT APPLICATION

(11) **EP 4 052 814 A1**
(43) Date of publication of application: **07.09.2022**
(21) Application number: 20883226.1
(22) Date of filing: 30.10.2020
(51) Int. Cl.: B21J 5/08, B21K 1/46, F16B 35/00, C22F 1/00, C22F 1/05, C22F 1/053

(54) **ALUMINUM ALLOY BOLT AND METHOD FOR MANUFACTURING SAME**

(30) Priority: 31.10.2019 JP 2019199031
(71) Applicant: Matsumoto Heavy Industry Co., Ltd., Hiroshima 737-1207 (JP); Hiroshima Prefecture, Naka-ku Hiroshima-shi, Hiroshima 730-8511 (JP)
(72) Inventor: SHIMOKAWA, Shinya, Kure-shi, Hiroshima 737-1207 (JP); UENO, Makoto, Kure-shi, Hiroshima 737-1207 (JP); NISHIMURA, Tomoki, Kure-shi, Hiroshima 737-1207 (JP); MORISHITA, Yuki, Kure-shi, Hiroshima 737-0004 (JP); FUYAMA, Nobuyuki, Kure-shi, Hiroshima 737-0004 (JP)
(74) Representative: HGF
(86) International application number: PCT/JP2020/040926
(87) International publication number: WO 2021/085627

(57) **Abstract**

An aluminum alloy bolt having a central axis C, the aluminum alloy bolt includes a head portion; an underhead portion extending downward from the head portion; an underhead fillet formed between the head portion and the underhead portion; and a screw portion formed in the underhead portion, wherein a curved region is defined, the curved region being surrounded by a lower surface that extends inward and is curved in a head portion direction from a surface of the underhead portion below an R-stop on a surface of the aluminum alloy bolt that is a boundary between the underhead portion and the underhead fillet by a certain distance L, an upper surface provided on a head portion side of the lower surface at a certain distance T from the lower surface, and the surface of the aluminum alloy bolt, and an average crystal grain size of first crystal grains of an aluminum alloy constituting the curved region is larger than an average crystal grain size of second crystal grains of an aluminum alloy constituting an inner part of the underhead portion in a screw portion adjacent region adjacent to the screw portion.

## Description

### TECHNICAL FIELD

The present invention relates to an aluminum alloy bolt and a method for manufacturing the same, and more particularly to an aluminum alloy bolt including a head portion and an underhead portion extending downward from a lower end surface of the head portion, and having an underhead fillet formed in a boundary region between the head portion and the underhead portion, and a method for manufacturing the same.

### BACKGROUND ART

In general, bolts are used to connect or fasten a plurality of members constituting a mechanical structure; however, aluminum alloy bolts are lightweight, and thus are sometimes used to connect or fasten a plurality of members constituting a structure such as an automobile that is strongly required to be reduced in weight.

Since the strength of the aluminum alloy is lower than that of steel, the crystal grains are refined to improve the strength. That is, an area of a crystal grain boundary increases as the crystal grains are refined, and the strength is improved in order to maintain a high energy state (refer to, for example, Patent Document 1.).

### PRIOR ART DOCUMENT

### PATENT DOCUMENT

Patent Document 1: JP 2011-190493 A

### SUMMARY OF THE INVENTION

### PROBLEMS TO BE SOLVED BY THE INVENTION

However, since the crystal grain boundary has a higher energy state than that in the crystal grain, the crystal grain boundary is preferentially corroded. For this reason, when the strength is improved by refining the crystal grains, there is a problem in that the sensitivity to stress corrosion cracking is increased.

Therefore, an object of the present invention is to provide an aluminum alloy bolt having high strength and high stress corrosion cracking resistance, and a method for manufacturing the same.

### MEANS FOR SOLVING THE PROBLEMS

Regarding the aluminum alloy bolt, when the crystal grains are refined as described above, the sensitivity to the stress corrosion cracking increases; however, the corrosion occurs particularly from a region where a stress applied during use is large or a surface region. From this, the inventors of the present invention have found that the stress corrosion cracking resistance can be improved while maintaining high strength by partially coarsening crystal grains in a region to which a large stress is applied during use and a region near the surface in an aluminum alloy bolt, and have completed the present invention.

That is, according to a first aspect of the present invention, there is provided an aluminum alloy bolt having a central axis C, the aluminum alloy bolt including:
a head portion;
an underhead portion extending downward from the head portion;
an underhead fillet formed between the head portion and the underhead portion; and
a screw portion formed in the underhead portion,
wherein a curved region is defined, the curved region being surrounded by a lower surface that extends inward and is curved in a head portion direction from a surface of the underhead portion below an R-stop on a surface of the aluminum alloy bolt that is a boundary between the underhead portion and the underhead fillet by a certain distance L, an upper surface provided on a head portion side of the lower surface at a certain distance T from the lower surface, and the surface of the aluminum alloy bolt, and
an average crystal grain size of first crystal grains of an aluminum alloy constituting the curved region is larger than an average crystal grain size of second crystal grains of an aluminum alloy constituting an inner part of the underhead portion in a screw portion adjacent region adjacent to the screw portion.

According to a second aspect of the present invention, there is provided an aluminum alloy bolt having a central axis C, the aluminum alloy bolt including:
a head portion;
an underhead portion extending downward from the head portion;
an underhead fillet formed between the head portion and the underhead portion; and
a screw portion formed in the underhead portion,
wherein an average crystal grain size of third crystal grains of an aluminum alloy constituting a screw portion adjacent region adjacent to the screw portion of the underhead portion is larger than an average crystal grain size of second crystal grains of an aluminum alloy constituting an inner part of the underhead portion in the screw portion adjacent region.

According to a third aspect of the present invention, there is provided a method for manufacturing an aluminum alloy bolt, the method including:
a step of preparing a rod material made of an aluminum alloy;
a step of producing an upsetting intermediate in which a large-diameter portion having a large diameter, a main body portion, and a tapered portion connecting the large-diameter portion and the main body portion are formed by performing upsetting on the rod material, and then applying plastic strain to the tapered portion;
a step of performing roller burnishing on the main body portion of the upsetting intermediate to produce a roller burnishing intermediate in which the plastic strain is applied to a surface of the main body portion and a vicinity of the surface;
a step of performing a heat treatment on the roller burnishing intermediate to coarsen crystal grains in the tapered portion and the main body portion to which the plastic strain is applied; and
a step of forming a screw in the main body portion of the roller burnishing intermediate after the heat treatment.

According to a fourth aspect of the present invention, there is provided a method for manufacturing an aluminum alloy bolt, the method including:
a step of preparing a rod material made of an aluminum alloy;
a step of producing an upsetting intermediate in which a large-diameter portion having a large diameter, a main body portion, and a tapered portion connecting the large-diameter portion and the main body portion are formed by performing upsetting on the rod material, and then applying plastic strain to the tapered portion;
a step of performing a heat treatment on the upsetting intermediate to coarsen crystal grains in the tapered portion to which the plastic strain is applied; and
a step of forming a screw in the main body portion of the upsetting intermediate after the heat treatment.

According to a fifth aspect of the present invention, there is provided a method for manufacturing an aluminum alloy bolt, the method including:
a step of preparing a rod material made of an aluminum alloy;
a step of producing an upsetting intermediate or an extrusion intermediate in which a large-diameter portion having a large diameter, a main body portion, and a tapered portion connecting the large-diameter portion and the main body portion are formed by performing upsetting or extrusion on the rod material, and then applying plastic strain to the tapered portion;
a step of annealing the upsetting intermediate or the extrusion intermediate to mitigate the plastic strain of the tapered portion;
a step of performing roller burnishing on a region where a screw is formed in the main body portion of the upsetting intermediate or the extrusion intermediate after the annealing to produce a roller burnishing intermediate in which the plastic strain is applied to a surface of the main body portion and a vicinity of the surface;
a step of performing a heat treatment on the roller burnishing intermediate to coarsen crystal grains in the main body portion to which the plastic strain is applied; and
a step of forming a screw in a region where a screw of the main body portion is formed.

According to a sixth aspect of the present invention, there is provided a method for manufacturing an aluminum alloy bolt, the method including:
a step of preparing a rod material made of an aluminum alloy;
a step of producing an extrusion intermediate in which a large-diameter portion having a large diameter, a main body portion, and a tapered portion connecting the large-diameter portion and the main body portion are formed by performing extrusion on the rod material, and then applying plastic strain to the tapered portion;
a step of performing a heat treatment on the extrusion intermediate to coarsen crystal grains in the tapered portion to which the plastic strain is applied; and
a step of forming a screw in the main body portion of the extrusion intermediate after the heat treatment.

According to a seventh aspect of the present invention, there is provided a method for manufacturing an aluminum alloy bolt, the method comprising:
a step of preparing a rod material made of an aluminum alloy;
a step of producing an extrusion intermediate in which a large-diameter portion having a large diameter, a main body portion, and a tapered portion connecting the large-diameter portion and the main body portion are formed by performing extrusion on the rod material, and then applying plastic strain to the tapered portion;
a step of performing roller burnishing on the main body portion of the extrusion intermediate to produce a roller burnishing intermediate in which the plastic strain is applied to a surface of the main body portion and a vicinity of the surface;
a step of performing a heat treatment on the roller burnishing intermediate to coarsen crystal grains in the tapered portion and the main body portion to which the plastic strain is applied; and
a step of forming a screw in the main body portion of the roller burnishing intermediate after the heat treatment.

### EFFECTS OF THE INVENTION

In the present invention, it is possible to obtain an aluminum alloy bolt having high strength and excellent stress corrosion cracking resistance by coarsening crystal grains in a curved region and/or a screw portion adjacent region of the aluminum alloy bolt so as to be larger than crystal grains in other portions.

### BRIEF DESCRIPTION OF THE DRAWINGS

Fig. 1 illustrates a relationship between an equivalent plastic strain and an average crystal grain size of a 7000 series aluminum alloy.
Fig. 2 illustrates a relationship between the average crystal grain size and durability of stress corrosion cracking of the aluminum alloy.
Fig. 3 illustrates a stress distribution in a bolt when an aluminum alloy bolt is fastened.
Fig. 4 illustrates names of parts of the aluminum alloy bolt.
Fig. 5 illustrates names of parts of the aluminum alloy bolt.
Fig. 6 illustrates an aluminum alloy bolt according to Example 1, Fig. 6(a) is a schematic cross-sectional view, and Figs. 6(b) to 6(d) are cross-sectional photographs.
Fig. 7 illustrates a step of manufacturing the aluminum alloy bolt according to Example 1.
Fig. 8 is a diagram illustrating a roller burnishing step.
Fig. 9 illustrates a heat treatment (T6 treatment) condition of the 7000 series aluminum alloy bolt.
Fig. 10 illustrates a step of manufacturing an aluminum alloy bolt according to Example 2.
Fig. 11 illustrates a step of manufacturing an aluminum alloy bolt according to Comparative Example 1.
Fig. 12 illustrates a step of manufacturing an aluminum alloy bolt according to Comparative Example 2.
Fig. 13 illustrates a step of manufacturing the aluminum alloy bolt according to Example 3.
Fig. 14 illustrates a step of manufacturing the aluminum alloy bolt according to Example 4.
Fig. 15 illustrates a relationship between an equivalent plastic strain and an average crystal grain size of a 6000 series aluminum alloy.
Fig. 16 illustrates a step of manufacturing an aluminum alloy bolt according to Example 5.
Fig. 17 illustrates a heat treatment (T6 treatment) condition of the 6000 series aluminum alloy bolt.
Fig. 18 illustrates a step of manufacturing the aluminum alloy bolt according to Example 6.
Fig. 19 illustrates a cross-sectional photograph of the aluminum alloy bolt according to Example 6.
Fig. 20 illustrates a step of manufacturing an aluminum alloy bolt according to Example 7.
Fig. 21 illustrates a step of manufacturing an aluminum alloy bolt according to Example 8.

### EMBODIMENTS OF THE INVENTION

### First Embodiment (7000 series aluminum alloy)

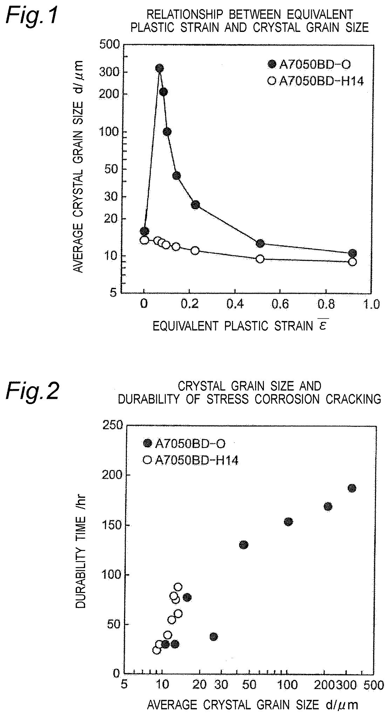

In the first embodiment of the invention, a 7000 series (Al-Zn-Mg-(Cu)) aluminum alloy is used as a bolt material. Fig. 1 illustrates the relationship between the equivalent plastic strain and the average crystal grain size in a case of applying strain to a 7000 series aluminum alloy material and then performing a heat treatment (T6 treatment). In Fig. 1, a white circle is an aluminum alloy of a material A7050BD-H14, and a black circle is an aluminum alloy of a material A7050BD-O, both of which are drawing rods. The white circle is a work-hardened hard material (material H14), and a black circle is an annealed soft material (material O). Measurement data of the material A7050BD-O indicated by the black circle in Fig. 1 is shown in Table 1.

**[Table 1]**

| Equivalent plastic strain | Average crystal grain size d/µm |
|---|---|
| 0 | 15.8 |
| 0.058 | 322.9 |
| 0.077 | 208.3 |
| 0.095 | 100.4 |
| 0.140 | 44.3 |
| 0.223 | 25.9 |
| 0.511 | 12.7 |
| 0.916 | 10.6 |

In particular, in the black circle soft material from which the strain has been removed by annealing, there is a remarkable tendency for the average crystal grain size to increase after the heat treatment as the applied equivalent plastic strain decreases from 0.9 to 0.1. As described above, it is found that the average crystal grain size of the aluminum alloy material can be controlled by controlling the amount of strain applied before the heat treatment.

Fig. 2 illustrates a relationship between the average crystal grain size and durability of stress corrosion cracking for the same material as in Fig. 1. A horizontal axis represents the average crystal grain size of the material, and a vertical axis represents an endurance time. The durability of stress corrosion cracking was performed in accordance with "JIS H 8711: Method for Testing Stress Corrosion Cracking of Aluminum Alloys". As can be seen from Fig. 2, the larger the average crystal grain size, the longer the endurance time against stress corrosion cracking. That is, it is found that as the average crystal grain size increases, the stress corrosion cracking resistance is improved.

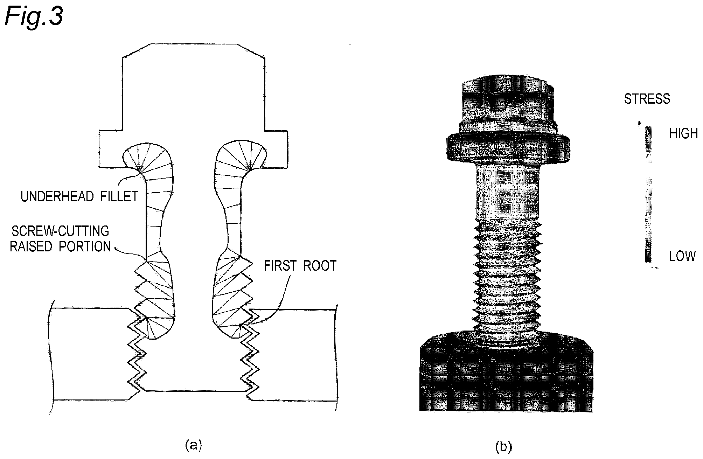

Fig. 3 illustrates a stress distribution in a bolt when an aluminum alloy bolt is fastened to a nut. It can be seen that the stress is particularly concentrated at three points: an "underhead fillet" below a head portion of the bolt illustrated in Fig. 3(a), a "screw-cutting raised portion" at an upper end of the screw formed in the bolt, and a "first root" at the upper end of a portion where a bolt meshes with a nut. A place where the stress is concentrated is displayed in red in Fig. 3(b).

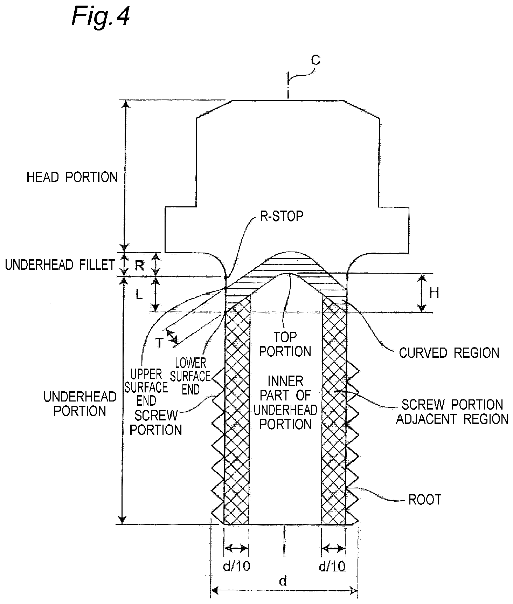

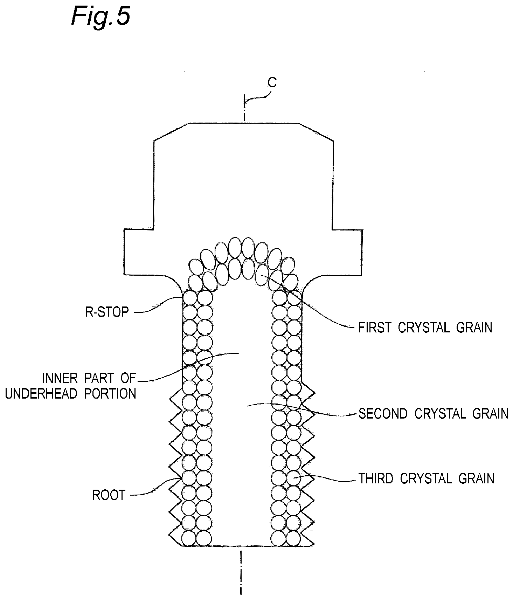

Here, Figs. 4 and 5 illustrate names of parts of the aluminum alloy bolt. As illustrated in Fig. 4, the aluminum alloy bolt includes a head portion, an underhead portion, and an underhead fillet connecting the head portion and the underhead portion. The underhead fillet refers to a portion where the diameter temporarily decreases from the bottom of the head portion, that is, a portion from the bottom of the head portion to the R-stop. The height (distance in the direction of the central axis C) of the underhead fillet is defined as R.

The curved region is defined in a region surrounded by a lower surface curved upward (head portion side) toward the central axis C from a lower surface end provided below (underhead portion side) the bolt surface at the R-stop position at a distance L, an upper surface provided above (head portion side) the lower surface at a certain distance T from the lower surface, and a surface of a bolt. In addition, the screw portion adjacent region is defined in a portion (inside the valley portion of the screw) excluding a screw forming portion around the underhead portion. The inner part of the screw portion adjacent region is the inner part of the underhead portion.

Portions where the upper surface and the lower surface intersect the surface of the bolt are referred to as an upper surface end and a lower surface end, respectively. A distance in a direction parallel to the central axis C from the R-stop to the lower surface end is referred to as L, and a height (distance in the central axis C direction) in a direction parallel to the central axis C from the lower surface end to a top portion of the lower surface is referred to as H. Note that the upper surface and the lower surface are flat surfaces or curved surfaces protruding upward, and a position on the uppermost side (head portion side) of the lower surface is a top portion. The top portion is preferably a position overlapping with the central axis C.

The distance L from the R-stop to the lower surface end is preferably in the range of 0 ≤ L ≤ 1.5R.

The distance T between the upper surface and the lower surface is preferably in the range of 0 < T ≤ R, and more preferably in the range of 0.5R ≤ T ≤ R.

On the other hand, the height H in the direction parallel to the central axis C from the lower surface end of the curved region to the top portion of the lower surface of the curved region is preferably in the range of 0 < H ≤ 3R, and more preferably in the range of R ≤ H ≤ 2R.

Further, as illustrated in Fig. 4, when a screw nominal diameter (an outer diameter of the screw) of the underhead portion is defined as d, a depth (distance from bottom of screw root in direction perpendicular to central axis C) of the screw portion adjacent region is defined as d/10.

Among the regions defined by Figs. 4 and 5, the crystal grains constituting the curved region, the inner part of the underhead portion, and the screw portion adjacent region are defined as first crystal grains, second crystal grains, and third crystal grains, respectively, and are illustrated in Fig. 5.

In the present specification, in order to briefly illustrate a positional relationship of the bolt, the side on which the head portion is formed with respect to the central axis C is referred to as "upper side", and the opposite side (the side on which the underhead portion or the screw portion is formed) is referred to as" lower side". A plane parallel to the central axis C is defined as a cross section.

Hereinafter, an aluminum alloy bolt according to the present invention will be described with reference to examples.

### <Example 1>

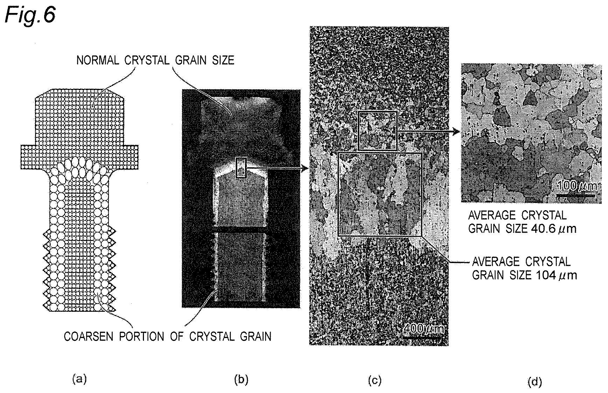

Fig. 6 is a 7000 series aluminum alloy bolt according to Example 1 of the present invention, Fig. 6(a) is a schematic cross-sectional view and Figs. 6(b) to 6(d) are cross-sectional photographs. The aluminum alloy bolt has a structure in which the crystal grains in the curved region and the screw portion adjacent region are coarsened. Figs. 6(c) and 6(d) are cross-sectional photographs enlarging the curved region. In Fig. 6(c), the upper and lower regions are regions having a normal crystal grain size, and a region surrounded by a square is a region in which crystal grains are coarsened.

The average crystal grain size of the curved region measured from the cross-sectional photograph by a cutting method is about 40 µm at the minimum and about 100 µm at the maximum. In the curved region, the crystal grains are coarsened in an elliptical shape in the central axis C direction, and the angle formed by the major axis direction of the coarsened crystal grains and the central axis C is 0° to 45°.

That is, an average crystal grain size d₁ of the first crystal grains in the curved region and an average crystal grain size d₃ of the third crystal grains in the screw portion adjacent region are larger than an average crystal grain size d₂ of the second crystal grains in other parts such as the inner part of the underhead portion. That is, d₁ > d₂ and d₃ > d₂ are satisfied. d₁ may be equal to d₃.

d₁ and d₃ are, for example, 40 µm or more and 1000 µm or less, and preferably 40 µm or more and 500 µm or less. d₂ is, for example, 1 µm or more and less than 40 µm, preferably 1 µm or more and 30 µm or less, and more preferably 1 µm or more and 20 µm or less.

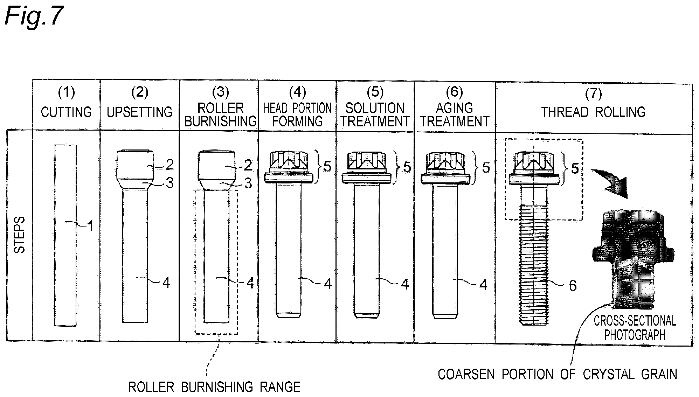

Fig. 7 is a diagram illustrating a method for manufacturing the aluminum alloy bolt according to Example 1 of the present invention. As the aluminum alloy of the material, for example, A7050BD-O of a 7000 series aluminum alloy (Al-Zn-Mg-(Cu)) is used. The manufacturing method includes the following steps (1) to (7).

### (1) Cutting

An aluminum alloy drawing rod (rod material) 1 is prepared and cut into a predetermined length. As the drawing rod 1, a high strength rod whose crystal grains are refined in advance is used. As described above, the size d₂ of the crystal grain is, for example, 1 µm or more and less than 40 µm.

### (2) Upsetting

A downward pressing force is applied to the drawing rod 1 disposed in a mold (not shown) with a hammer or the like to perform upsetting, and the upper end of the drawing rod 1 is plastically deformed to prepare an upsetting intermediate in which a large-diameter portion 2 and a tapered portion 3 are formed. The large-diameter portion 2 and the tapered portion 3 finally become a head portion (bolt head) 5 as described later. On the other hand, a main body portion 4 on the lower side of the tapered portion 3 of the drawing rod 1 is not plastically deformed and becomes the underhead portion as it is.

By (2) an upsetting step, plastic strain is applied to the crystal grains in the vicinity of the tapered portion 3, and coarsening of the crystal grains occurs in this portion by a heat treatment described later. The plastic strain applied to the crystal grains satisfies 0 < ε ≤ 0.5 and preferably satisfies 0.05 ≤ ε ≤ 0.2 in terms of equivalent plastic strain ε ("ε" representing equivalent plastic strain is correctly represented as "a bar above ε". The same applies hereinafter).

### (3) Roller burnishing

The main body portion 4 of the upsetting intermediate is subjected to roller burnishing to apply plastic strain, thereby producing a roller burnishing intermediate in which the plastic strain is applied to the surface of the main body portion and the vicinity of the surface. In Fig. 7, a portion surrounded by a broken line is a roller burnishing range. The crystal grains are coarsened on the surface of the main body portion 4 and in the vicinity of the surface by a heat treatment described later.

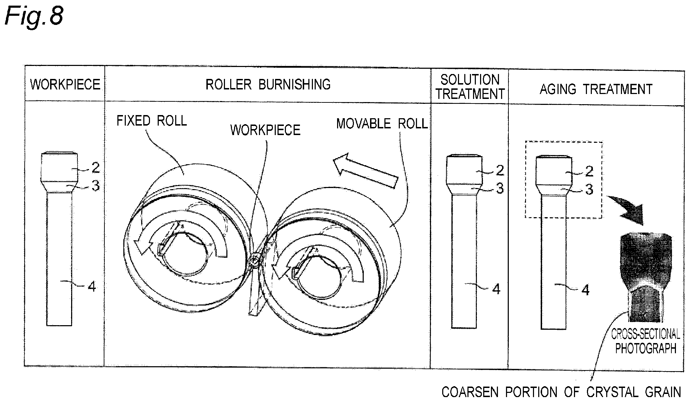

Fig. 8 is a schematic view illustrating a roller burnishing step. The roller burnishing range of the main body portion 4 of the upsetting intermediate subjected to the upsetting step is arranged so as to be sandwiched between a fixed roll and a movable roll, and is rotated in the directions of the fixed roll and movable roll arrows while being pressurized by the movable roll. As a result, the plastic strain is applied to the surface of the main body portion 4 of the upsetting intermediate and the crystal in the vicinity of the surface. The plastic strain applied to the crystal grains satisfies 0 < ε ≤ 0.5 and preferably satisfies 0.05 ≤ ε ≤ 0.2 in terms of equivalent plastic strain ε.

As the roller burnishing step, a rotating method such as a flat die type or a planetary type may be used.

### (4) Head portion forming

The large-diameter portion 2 and the tapered portion 3 are pressed to form the head portion (bolt head) 5.

### (5) Solution treatment/(6) Aging treatment

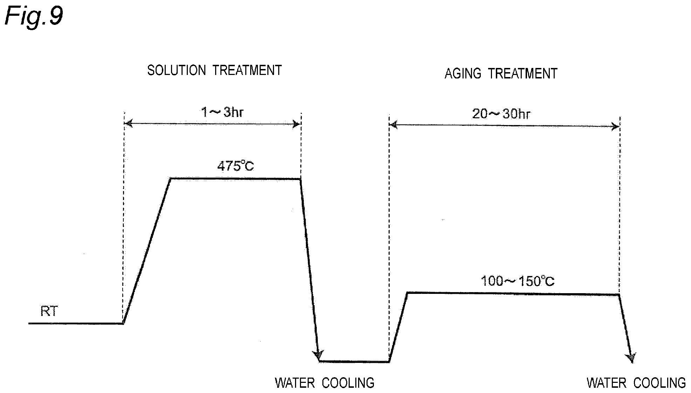

A head portion forming intermediate subjected to a head portion forming step is subjected to a heat treatment, that is, a solution treatment and an aging treatment. Fig. 9 is a temperature diagram of the solution treatment and the aging treatment. As illustrated in Fig. 9, in the solution treatment, for example, the temperature is raised to 475°C and held for 1 to 3 hours. Subsequently, for example, after being placed in water and rapidly cooled, an aging treatment is performed. The aging treatment is carried out, for example, by holding at a temperature of 100°C to 150°C for 20 to 30 hours.

By the heat treatment step, coarsening of the crystal grains occurs at a portion to which the plastic strain is applied in (2) the upsetting step and (3) the roller burnishing step.

### (7) Thread rolling

A screw is formed on the surface of the main body portion 4 by the (7) thread rolling. Through this step, only the crystal grains constituting the screw portion are refined. Through the above steps, the aluminum alloy bolt according to Example 1 is completed. As shown in the cross-sectional photograph, it can be seen that the crystal grains in a region to which the plastic strain having a predetermined size is applied in the (2) upsetting step and the (3) roller burnishing step, that is, a curved region and a screw portion adjacent region in Fig. 4 are coarsened by the subsequent heat treatment.

As described above, in the aluminum alloy bolt of Example 1, the crystal grains in the curved region and the screw portion adjacent region are coarsened, and the average crystal grain size d₁ of the curved region and the average crystal grain size d₃ of the crystal grains in the screw portion adjacent region are larger than the average grain size d₂ of the crystal grains in other parts such as the inner part of the underhead portion (d₁ > d₂ and d₃ > d₂).

As a result, the crystal grains can be coarsened and the stress corrosion cracking resistance can be improved in the underhead fillet, the screw-cutting raised portion, and the first root (refer to Fig. 3) where the stress concentrates during bolt fastening and stress corrosion cracking is likely to occur. In addition, since the crystal grains of other parts such as the inner part of the underhead portion remain fine, high strength can also be maintained. As a result, it is possible to obtain an aluminum alloy bolt having excellent stress corrosion cracking resistance and high strength.

### <Example 2>

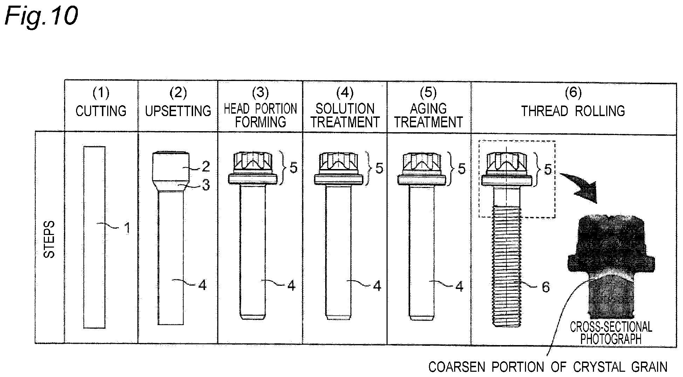

Fig. 10 is a diagram illustrating a step of manufacturing the aluminum alloy bolt according to Example 2 of the present invention. In Example 2, only the crystal grains in the curved region are coarsened, and the crystal grains in the screw portion adjacent region are not coarsened. As the aluminum alloy of the material, for example, A7050BD-O of a 7000 series aluminum alloy is used.

Similarly to Example 1, (1) a cutting step of preparing an aluminum alloy drawing rod 1 and cutting the drawing rod 1 to a predetermined length, and (2) an upsetting step of disposing the drawing rod 1 in a mold, applying a downward pressing force with a hammer or the like to perform upsetting, plastically deforming an upper end of the drawing rod 1, and forming a large-diameter portion 2 and a tapered portion 3 are performed.

The plastic strain is applied to the tapered portion 3 by the (2) upsetting step. Similarly to Example 1, the plastic strain applied to the crystal grains satisfies 0 < ε ≤ 0.5 and preferably satisfies 0.05 ≤ ε ≤ 0.2 in terms of equivalent plastic strain ε*.*

The large-diameter portion 2 and the tapered portion 3 are subjected to (3) pressing to form a head portion 5 without performing the roller burnishing of the main body portion 4 as in Example 1.

A head portion forming intermediate subjected to the head portion forming is subjected to a heat treatment, that is, a (4) solution treatment and an (5) aging treatment. For the heat treatment, a T6 treatment illustrated in Fig. 9 is used. As a result, the coarsening of the crystal grains occurs in the curved region to which the plastic strain is applied in the (2) upsetting step.

A screw portion 6 is formed on the main body portion 4 by the (6) thread rolling. Through this step, only the crystal grains constituting the screw portion are refined. Through the above steps, the aluminum alloy bolt according to Example 2 is completed.

As shown in the cross-sectional photograph of Fig. 10, in the aluminum alloy bolt according to Example 2, the crystal grains in the curved region are coarsened.

In the aluminum alloy bolt of Example 2, it is possible to obtain a high-strength aluminum alloy bolt having excellent stress corrosion cracking resistance at the underhead fillet (refer to Fig. 3).

### <Comparative Example 1>

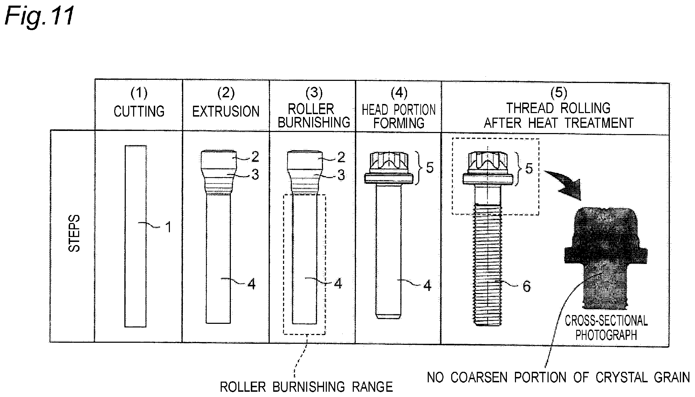

Fig. 11 is a diagram illustrating a step of manufacturing an aluminum alloy bolt according to Comparative Example 1. As the aluminum alloy of the material, an O material, for example, A7050BD-O is used.

In Comparative Example 1, the large-diameter portion 2 and the tapered portion 3 are formed in the (2) extrusion step instead of the (2) upsetting step of Example 2. That is, the extrusion (extrusion forming) is performed from the position corresponding to the underhead fillet to the lower end portion of the drawing rod 1 to form the main body portion 4. In the portion subjected to the extrusion, the diameter of the cross section decreases, and the length of the main body portion 4 extends in the direction of the central axis C, so that the flow of the aluminum alloy material occurs in the main body portion 4, and a large working strain is applied.

After the (2) extrusion, the main body portion 4 of an extrusion intermediate is subjected to the (3) roller burnishing step to apply the plastic strain thereto, thereby producing a roller burnishing intermediate to which the plastic strain is further applied on the surface of the main body portion. In the extrusion, a portion surrounded by a broken line is a roller burnishing range.

After the (3) roller burnishing, the large-diameter portion 2 and the tapered portion 3 are pressed in the (4) head portion forming step to form the head portion 5.

After the heat treatment (solution treatment and aging treatment) step (T6 treatment) similar to that in Examples 1 and 2 is performed on the head portion forming intermediate subjected to the head forming, a screw portion 6 is formed in the main body portion 4 by (5) thread rolling. Through this thread rolling step, only the crystal grains constituting the screw portion are refined. Through the above steps, the aluminum alloy bolt according to Comparative Example 1 is completed.

As shown in the cross-sectional photograph of Fig. 11, coarsening of the crystal grains is not observed in Comparative Example 1. That is, in addition to the large working strain applied at the time of forming the large-diameter portion 2, the tapered portion 3, and the main body portion 4 in the (2) extrusion step, the sufficient plastic strain exceeding 0.5 in terms of, for example, equivalent plastic strain was introduced into the underhead fillet due to the working strain further applied in the (3) roller burnishing step and the (4) head portion forming step, and thus coarsening of the crystal grains did not occur by the heat treatment, and the crystal grains were refined. Therefore, the underhead fillet had a fine structure, the average crystal grain size was small, and the stress corrosion cracking resistance was not improved.

### <Comparative Example 2>

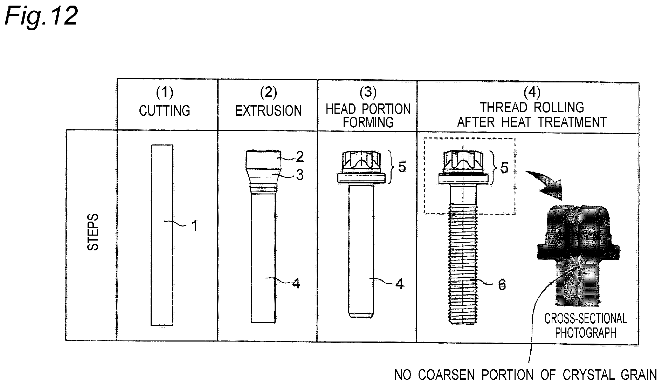

Fig. 12 is a diagram illustrating a step of manufacturing an aluminum alloy bolt according to Comparative Example 2. As the aluminum alloy of the material, an O material, for example, A7050BD-O is used.

The manufacturing step is the same up to the (2) extrusion step as in Comparative Example 1 described above.

The large-diameter portion 2 and the tapered portion 3 are subjected to the (3) head portion forming step to form a head portion 5 without performing the roller burnishing of the main body portion 4 as in Comparative Example 1.

After the heat treatment (solution treatment and aging treatment) step (T6 treatment) similar to that in Examples 1 and 2 is performed on the head portion forming intermediate subjected to the head forming, a screw portion 6 is formed in the main body portion 4 by the (4) thread rolling. Through this thread rolling step, only the crystal grains constituting the screw portion are refined. Through the above steps, the aluminum alloy bolt according to Comparative Example 2 is completed.

As shown in the cross-sectional photograph of Fig. 12, also in Comparative Example 2, coarsening of the crystal grains is not observed in the underhead fillet.

Table 2 below is a comparison of the durability in the stress corrosion cracking test of Examples 1 and 2 and Comparative Examples 1 and 2. The aluminum alloy of the material is A7050BD-O (O material).

**[Table 2]**

| | Forming method | Roller burnishing | Tensile strength | Stress corrosion cracking durability time | Durability |
|---|---|---|---|---|---|
| Example 1 | Upsetting | Performed | 574 MPa | 1000 HR or more | ○ |
| Example 2 | Upsetting | Not performed | 579 MPa | 581 HR | ○ |
| Comparative Example 1 | Extrusion | Performed | 576 MPa | 110 HR | × |
| Comparative Example 2 | Extrusion | Not performed | 579 MPa | 120 HR | × |

As shown in Table 2, in Examples 1 and 2 in which the upsetting step was used in the forming method, the stress corrosion cracking durability time was 1000 hours or more at a tensile strength of 574 MPa in Example 1 in which the roller burnishing was performed to coarsen the crystal grains in both the curved region and the screw portion adjacent region. In Example 2 in which the crystal grains were coarsened only in the curved region without being subjected to roller burnishing, the tensile strength was 579 MPa, and the stress corrosion cracking durability time was 581 hours. All of them showed high durability.

On the other hand, in Comparative Examples 1 and 2 in which the crystal grains were not coarsened using the extrusion step in the forming method, the stress corrosion cracking durability time was 110 hours and 120 hours, and the durability was insufficient.

This also indicates that the plastic strain is applied to the curved region by performing the upsetting step, the crystal grains are coarsened in the heat treatment step, and the durability is improved.

### <Example 3>

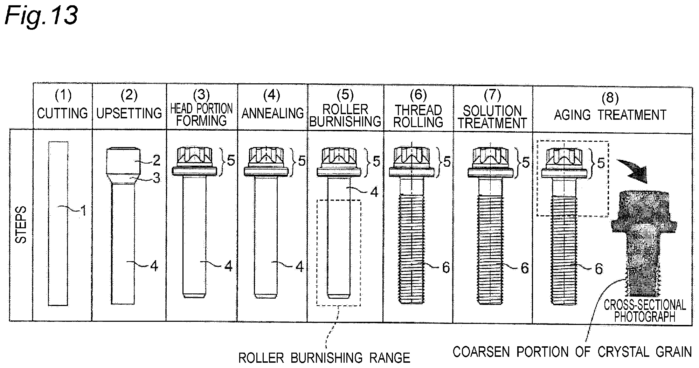

Fig. 13 is a diagram illustrating a step of manufacturing the aluminum alloy bolt according to Example 3 of the present invention. In Example 3, as the aluminum alloy of the material, a H14 material, for example, A7050BD-H14 is used.

In the manufacturing step, similarly to Example 1, (1) a cutting step of preparing an aluminum alloy drawing rod 1 and cutting the drawing rod 1 to a predetermined length, and (2) an upsetting step of disposing the drawing rod 1 in a mold, applying a downward pressing force with a hammer or the like to perform upsetting, plastically deforming an upper end of the drawing rod 1, and forming a large-diameter portion 2 and a tapered portion 3 are performed so as to produce an upsetting intermediate. The plastic strain is applied to the tapered portion 3 by the upsetting step.

Subsequently, the (3) head portion forming step is performed, and the large-diameter portion 2 and the tapered portion 3 are pressed to form the head portion 5.

Subsequently, the (4) annealing step is performed to mitigate the plastic strain of the tapered portion 3 formed by the upsetting step.

Next, the (5) roller burnishing step is performed, and the roller burnishing is performed in a roller burnishing range forming the screw portion 6 of the main body portion 4 to apply the plastic strain to the surface of the screw forming portion of the main body portion 4 and the vicinity thereof. The roller burnishing is performed by, for example, the method illustrated in Fig. 8.

Next, the screw portion 6 is formed in the main body portion 4 by the thread rolling step (6). Through this step, only the crystal grains constituting the screw portion are refined.

Finally, the thread rolling intermediate subjected to the thread rolling step is subjected to the heat treatment, that is, the (7) solution treatment and the (8) aging treatment. For the heat treatment, a T6 treatment illustrated in Fig. 9 is used. As a result, the crystal grains are coarsened only in the screw portion adjacent region adjacent to the screw portion 6. Through the above steps, the aluminum alloy bolt according to Example 3 is completed.

As shown in the cross-sectional photograph of Fig. 13, in the aluminum alloy bolt according to Example 3, the crystal grains at the underhead fillet are not coarsened, and only the crystal grains in the screw portion adjacent region adjacent to the screw portion 6 can be coarsened.

As described above, by using the method of Example 3, it is possible to obtain an aluminum alloy bolt having the excellent stress corrosion cracking resistance particularly in a screw portion.

### <Example 4>

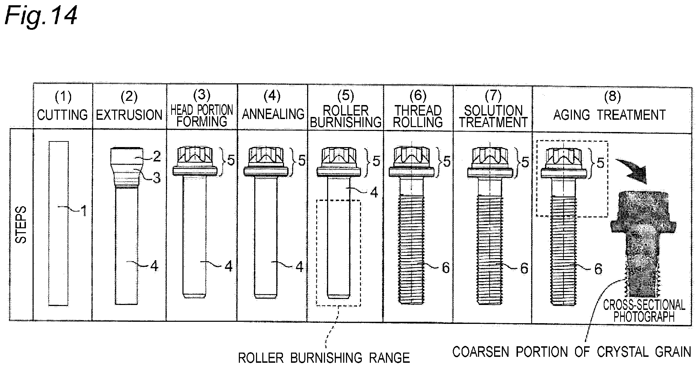

Fig. 14 is a diagram illustrating a step of manufacturing the aluminum alloy bolt according to Example 4 of the present invention. In Example 4, as the aluminum alloy of the material, an O material, for example, A7050BD-O, or an H14 material, for example, A7050BD-H14 is used.

In the manufacturing step, instead of the (2) upsetting step of Example 3, the large-diameter portion 2 and the tapered portion 3 are formed in the (2) extrusion step to produce an extrusion intermediate. In the subsequent (3) head portion forming step, the large-diameter portion 2 and the tapered portion 3 are pressed to form the head portion 5.

Subsequent steps (4) to (8) are the same as those in Example 3. Through the above steps, the aluminum alloy bolt according to Example 4 is completed.

As shown in the cross-sectional photograph of Fig. 14, in the aluminum alloy bolt according to Example 4, by using the extrusion step instead of the upsetting step, the crystal grains of the underhead fillet are not coarsened and only the crystal grains of the screw portion adjacent region can be coarsened regardless of the materials of the O material and the H14 material.

As described above, by using the method of Example 4, it is possible to obtain an aluminum alloy bolt having the excellent stress corrosion cracking resistance particularly in a screw portion.

An anodic oxide film, a chemical conversion treatment film, an insulating film, and the like may be formed on the surface of the aluminum alloy bolt (the same applies to the following second embodiment).

### Second Embodiment (6000 series aluminum alloy)

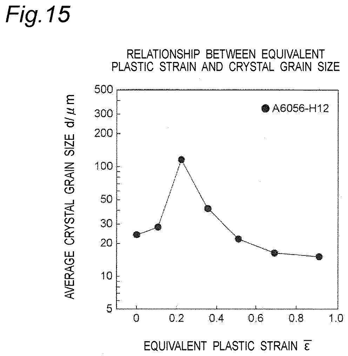

In the second embodiment of the present invention, a case where a 6000 series (Al-Mg-Si) aluminum alloy is used for a bolt material will be described. Fig. 15 illustrates the relationship between the equivalent plastic strain and the average crystal grain size in a case of applying strain to a 6000 series aluminum alloy material and then performing a heat treatment (T6 treatment). A black circle is a drawing rod obtained by subjecting an aluminum alloy of the material A6056-H12 to cold working and work hardening. When the applied equivalent plastic strain is around 0.22, the average crystal grain size tends to increase after the heat treatment. As described above, it is found that the average crystal grain size of the aluminum alloy material can be controlled by controlling the amount of strain applied before the heat treatment. Measurement data of the material A6056-H12 indicated by the black circle in Fig. 15 is shown in Table 3.

**[Table 3]**

| Equivalent plastic strain | Average crystal grain size d/µm |
|---|---|
| 0 | 24.0 |
| 0.105 | 28.2 |
| 0.223 | 115.5 |
| 0.357 | 41.3 |
| 0.511 | 21.9 |
| 0.693 | 16.3 |
| 0.916 | 15.1 |

### <Example 5>

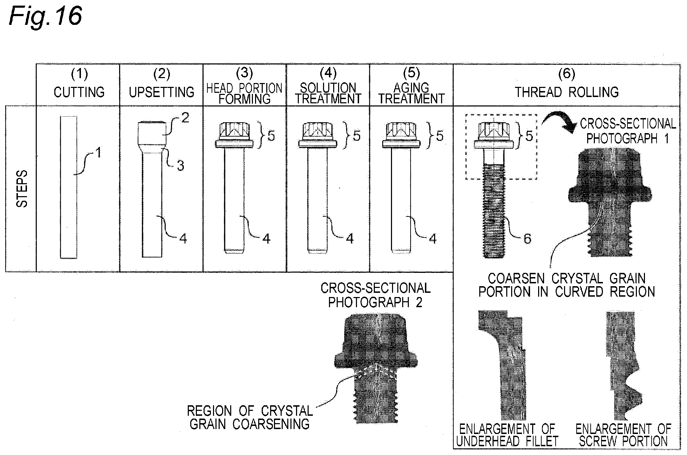

Fig. 16 is a diagram illustrating a step of manufacturing the aluminum alloy bolt according to Example 5 of the present invention. As the aluminum alloy of the material, for example, A6056-H12 of a 6000 series aluminum alloy is used.

The manufacturing step of Fig. 16 is substantially similar to the manufacturing step of Example 2 illustrated in Fig. 10, and will be briefly described below.

### (1) Cutting

An aluminum alloy drawing rod (rod material) 1 is prepared and cut into a predetermined length. As the drawing rod 1, a high strength rod whose crystal grains are refined in advance is used. As described above, the size d₂ of the crystal grain is, for example, 1 µm or more and less than 40 µm.

### (2) Upsetting

The drawing rod 1 is disposed in a mold, and upsetting is performed by applying a downward pressing force with a hammer or the like, and the upper end is plastically deformed to form the large-diameter portion 2 and the tapered portion 3. The plastic strain is applied to the tapered portion 3 by the upsetting step. The plastic strain applied to the crystal grains satisfies 0.1 ≤ ε ≤ 0.5 and preferably satisfies 0.2 ≤ ε ≤ 0.4 in terms of equivalent plastic strain ε.

### (3) Head portion forming

The large-diameter portion 2 and the tapered portion 3 are pressed to form the head portion (bolt head) 5. Note that the roller burnishing of the main body portion 4 is not performed.

### (4) Solution treatment/(5) Aging treatment

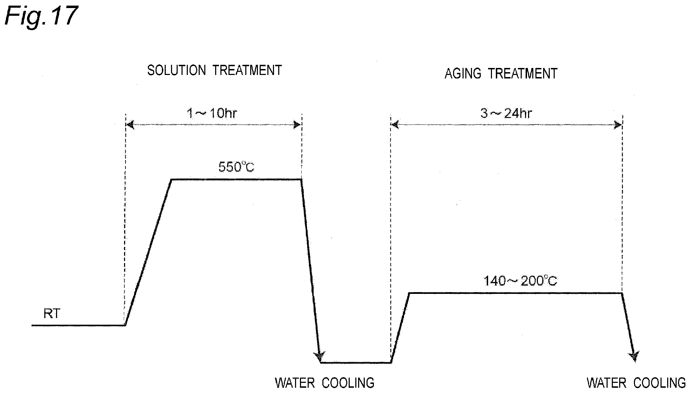

A head portion forming intermediate subjected to a head portion forming step is subjected to a heat treatment, that is, a solution treatment and an aging treatment. Fig. 17 is a temperature diagram of the solution treatment and the aging treatment. As illustrated in Fig. 17, in the solution treatment, for example, the temperature is raised to 550°C and held for 1 to 10 hours. Subsequently, for example, after being placed in water and rapidly cooled, an aging treatment is performed. The aging treatment is carried out, for example, by holding at a temperature of 140°C to 200°C for 3 to 24 hours. By the heat treatment step, coarsening of the crystal grains occurs in the tapered portion 3 to which the plastic strain is applied in the upsetting step.

### (6) Thread rolling

A screw is formed on the surface of the main body portion 4 by the thread rolling. Through this step, only the crystal grains constituting the screw portion are refined. Through the above steps, the aluminum alloy bolt according to Example 5 is completed. As shown in the cross-sectional photographs 1 and 2 of Fig. 16, it can be seen that the crystal grains in a region to which the plastic strain having a predetermined size is applied, that is, in a curved region in the (2) upsetting step are coarsened by the subsequent heat treatment.

As described above, in the aluminum alloy bolt of Example 5, the crystal grains in the curved region are coarsened, and the average crystal grain size d₁ in the curved region is larger than the average grain size d₂ of the crystal grains in other parts such as the inner part of the underhead portion (d₁ > d₂). As a result, the crystal grains can be coarsened and the stress corrosion cracking resistance can be improved in the underhead fillet (refer to Fig. 3) where the stress concentrates during bolt fastening and stress corrosion cracking is likely to occur. In addition, as can be seen from the cross-sectional photograph 2, since the crystal grains of other parts such as the inner part of the underhead portion remain fine, high strength can also be maintained. As a result, it is possible to obtain an aluminum alloy bolt having excellent stress corrosion cracking resistance and high strength.

### <Example 6>

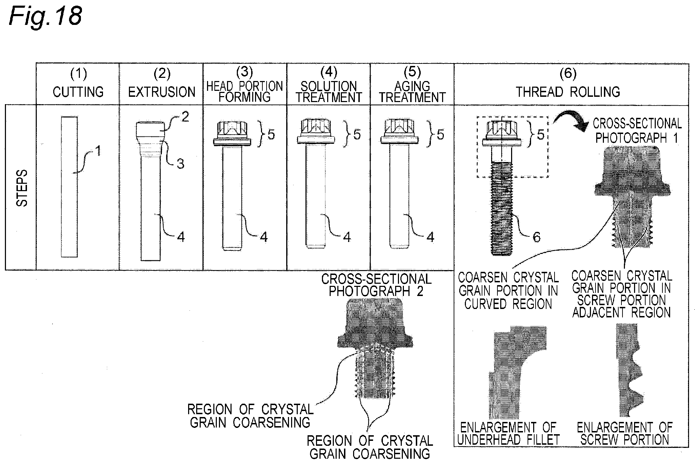

Fig. 18 is a diagram illustrating a step of manufacturing an aluminum alloy bolt according to Example 6. As the 6000 aluminum alloy of the material, an H12 material, for example, A6056-H12 is used.

In Example 6, the large-diameter portion 2 and the tapered portion 3 are formed in the (2) extrusion step instead of the (2) upsetting step of Example 5. That is, the extrusion (extrusion forming) is performed from the position corresponding to the underhead fillet to the lower end portion of the drawing rod 1 to form the main body portion 4. In the portion subjected to the extrusion, the diameter of the cross section decreases, and the length of the main body portion 4 extends in the direction of the central axis C, so that the flow of the aluminum alloy material occurs in the main body portion 4, and a large working strain is applied. The plastic strain applied to the crystal grains satisfies 0.1 ≤ ε ≤ 0.5 and preferably satisfies 0.2 ≤ ε ≤ 0.4 in terms of equivalent plastic strain ε.

After the (2) extrusion, the large-diameter portion 2 and the tapered portion 3 are pressed in the (3) head portion forming step to form the head portion 5.

After the heat treatment ((4) solution treatment and (5) aging treatment) step (refer to Fig. 17) similar to that in Example 5 is performed on the head portion forming intermediate subjected to the head forming, a screw portion 6 is formed in the main body portion 4 by the (6) thread rolling. Through the above steps, the aluminum alloy bolt according to Example 6 is completed.

As shown in the cross-sectional photographs 1 and 2 of Fig. 18, it can be seen that the crystal grains in a region to which the plastic strain having a predetermined size is applied in the (2) extrusion step and the (6) thread rolling step, that is, a curved region and a screw portion adjacent region are coarsened by the subsequent heat treatment.

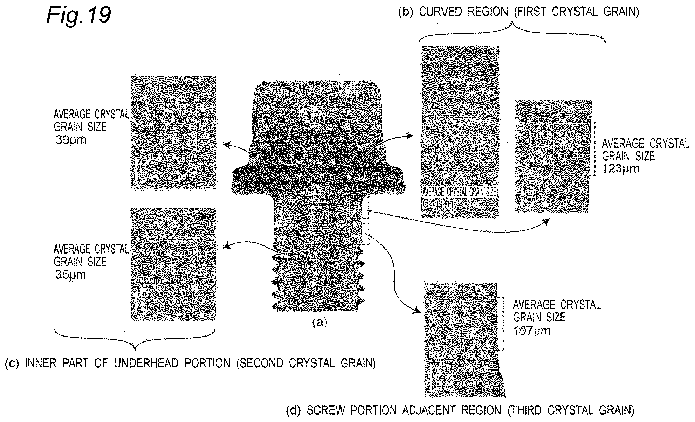

Fig. 19 is an enlarged photograph of a cross section of each region of the aluminum alloy bolt according to Example 6 and measurement results of a crystal grain size. In Fig. 19(b), in the curved region, the crystal grains are coarsened, and the crystal grain size d₁ is 64 µm or 123 µm. In Fig. 19(c), the crystal grain size d₂ is 35 µm or 39 µm while the crystal grains are refined in the underhead portion. In Fig. 19 (d), in the screw portion adjacent region, the crystal grains are coarsened, and the crystal grain size d₃ is 107 µm.

In Example 6, the crystal grains are coarsened in the screw portion adjacent region without performing the roller burnishing step. This is because, in the preparation step of the rod material, the (1) cutting step, and the (2) extrusion step, the material in a region corresponding to the screw portion adjacent region flowed, and the working strain of about the equivalent plastic strain 0.22 illustrated in Fig. 15 was applied.

As described in Comparative Example 2, when extrusion was performed using the 7000 series aluminum alloy, coarsening of the crystal grains was not observed; whereas when the 6000 series aluminum alloy was used as in Example 5, coarsening of the crystal grains was observed in the curved region and the screw portion adjacent region. As illustrated in Figs. 1 and 15, the reason for this is presumed to be that the amount of plastic strains required for coarsening the crystal grains is different between the 7000 series aluminum alloy and the 6000 series aluminum alloy. That is, in a case of the 7000 series aluminum alloy, since excessive plastic strains such that the equivalent plastic strain ε was 0.7 or more was introduced in the (2) extrusion step and the (6) thread rolling step, the coarsening of the crystal grains did not occur by the heat treatment, and the crystal grains were refined. On the other hand, in the case of the 6000 series aluminum alloy, it is considered that since appropriate plastic strains were applied in the (2) extrusion step, the crystal grains were able to be sufficiently coarsened.

Table 4 below illustrates a comparison of the durability of the aluminum alloy bolts of Examples 5 and 6 in the stress corrosion cracking test. The aluminum alloy of the material is A6056-H12.

**[Table 4]**

| | Forming method | Roller burnishing | Tensile strength | Stress corrosion cracking durability time | Durability |
|---|---|---|---|---|---|
| Example 5 | Upsetting | Not performed | 400 MPa | 2000 HR or more | ○ |
| Example 6 | Extrusion | Not performed | 418 MPa | 2000 HR or more | ○ |

As shown in Table 4, when a 6000 series aluminum alloy was used as a material, regardless of whether the forming method was upsetting (Example 5) or extrusion (Example 6), high durability with a tensile strength of about 400 MPa and a stress corrosion cracking durability time of 2000 Hr or more was obtained. This is considered to be because when the 6000 series aluminum alloy is used as a material, coarsening of the crystal grains occurs in the curved region regardless of the forming method.

### <Example 7>

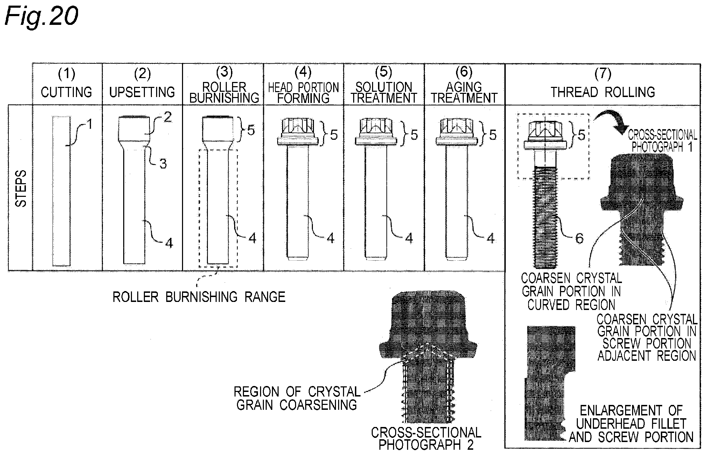

Fig. 20 is a diagram illustrating a step of manufacturing the aluminum alloy bolt according to Example 7 of the present invention, and the manufacturing step (refer to Fig. 16) of Example 5 further includes a roller burnishing step. As the aluminum alloy of the material, for example, A6056-H12 of a 6000 series aluminum alloy is used.

The manufacturing step illustrated in Fig. 20 is substantially the same as the manufacturing step of Example 5 illustrated in Fig. 16, but after the (2) upsetting step, the (3) roller burnishing step is further performed on the main body portion 4. The (3) roller burnishing step is the same as the step in Example 1 (refer to, for example, Fig. 8) .

In the (3) roller burnishing step, the main body portion 4 of the upsetting intermediate is subjected to roller burnishing to apply plastic strain, thereby producing a roller burnishing intermediate in which the plastic strain is applied to the surface of the main body portion and the vicinity of the surface. In Fig. 20, a portion surrounded by a broken line is a roller burnishing range, and the crystal grains are coarsened on the surface of the main body portion 4 and in the vicinity of the surface by this step. The plastic strain applied to the crystal grains satisfies 0.1 ≤ ε ≤ 0.5 and preferably satisfies 0.2 ≤ ε ≤ 0.4 in terms of equivalent plastic strain ε*.*

After the (3) roller burnishing step, as in Example 5, the steps of the (4) head portion forming, the (5) solution treatment, the (6) aging treatment, and the (7) thread rolling are performed to complete the aluminum alloy bolt.

As shown in the cross-sectional photographs 1 and 2, the crystal grains in a region to which the plastic strain having a predetermined size is applied in the (2) upsetting step and the (3) roller burnishing step, that is, a curved region and a screw portion adjacent region in the photograph 1 are coarsened by the subsequent heat treatment.

As described above, in the aluminum alloy bolt of Example 7, the crystal grains in the curved region and the screw portion adjacent region are coarsened, and the average crystal grain size d₁ of the curved region and the average crystal grain size d₃ of the screw portion adjacent region are larger than the average grain size d₂ of the crystal grains in other parts such as the inner part of the underhead portion (d₁ > d₂ and d₃ > d₂). As a result, the crystal grains can be coarsened and the stress corrosion cracking resistance can be improved in the underhead fillet (refer to Fig. 3) where the stress concentrates during bolt fastening and stress corrosion cracking is likely to occur. In addition, as can be seen from the cross-sectional photograph 2, since the crystal grains of other parts such as the inner part of the underhead portion remain fine, high strength can also be maintained. As a result, it is possible to obtain an aluminum alloy bolt having excellent stress corrosion cracking resistance and high strength.

### <Example 8>

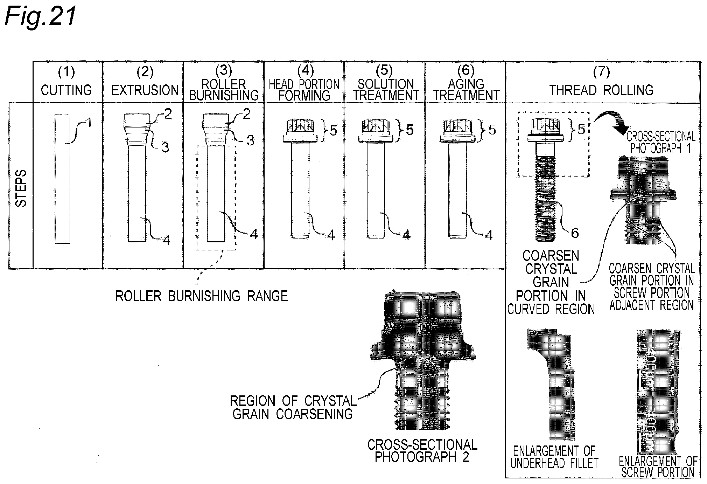

Fig. 21 is a diagram illustrating a step of manufacturing the aluminum alloy bolt according to Example 8 of the present invention, and the manufacturing step (refer to Fig. 18) of Example 6 further includes a roller burnishing step. As the aluminum alloy of the material, for example, A6056-H12 of a 6000 series aluminum alloy is used.

The manufacturing step illustrated in Fig. 21 is substantially the same as the manufacturing step of Example 5 illustrated in Fig. 18, but after the (2) extrusion step, the (3) roller burnishing step is further performed on the main body portion 4. The (3) roller burnishing step is the same as the step in Example 1. In Fig. 21, a portion surrounded by a broken line is a roller burnishing range, and the crystal grains are coarsened on the surface of the main body portion 4 and in the vicinity of the surface by this step. The plastic strain applied to the crystal grains satisfies 0.1 ≤ ε ≤ 0.5 and preferably satisfies 0.2 ≤ ε ≤ 0.4 in terms of equivalent plastic strain ε.

After the (3) roller burnishing step, as in Example 6, the steps of the (4) head portion forming, the (5) solution treatment, the (6) aging treatment, and the (7) thread rolling are performed to complete the aluminum alloy bolt.

As shown in the cross-sectional photographs 1 and 2, it can be seen that the crystal grains in a region to which the plastic strain having a predetermined size is applied in the (2) upsetting step and the (3) roller burnishing step, that is, a curved region and a screw portion adjacent region in the photograph 1 are coarsened by the subsequent heat treatment.

As described above, in the aluminum alloy bolt of Example 8, the crystal grains in the curved region and the screw portion adjacent region are coarsened, and the average crystal grain size d₁ of the curved region and the average crystal grain size d₃ of the screw portion adjacent region are larger than the average grain size d₂ of the crystal grains in other parts such as the inner part of the underhead portion (d₁ > d₂ and d₃ > d₂). As a result, the crystal grains can be coarsened and the stress corrosion cracking resistance can be improved in the underhead fillet (refer to Fig. 3) where the stress concentrates during bolt fastening and stress corrosion cracking is likely to occur. In addition, as can be seen from the cross-sectional photograph 2, since the crystal grains of other parts such as the inner part of the underhead portion remain fine, high strength can also be maintained. As a result, it is possible to obtain an aluminum alloy bolt having excellent stress corrosion cracking resistance and high strength.

### INDUSTRIAL APPLICABILITY

The aluminum alloy bolt according to the present invention can be used for connecting and fastening structures that are strongly required to be reduced in weight, such as various transport machines such as automobiles, railways, ships, aircraft, and mobile vehicles.

### DESCRIPTION OF REFERENCE SYMBOLS

- 1: DRAWING ROD
- 2: LARGE-DIAMETER PORTION
- 3: TAPERED PORTION
- 4: MAIN BODY PORTION
- 5: HEAD PORTION
- 6: SCREW PORTION

## Claims

1. An aluminum alloy bolt having a central axis C, the aluminum alloy bolt comprising:
a head portion;
an underhead portion extending downward from the head portion;
an underhead fillet formed between the head portion and the underhead portion; and
a screw portion formed in the underhead portion,
wherein a curved region is defined, the curved region being surrounded by a lower surface that extends inward and is curved in a head portion direction from a surface of the underhead portion below an R-stop on a surface of the aluminum alloy bolt that is a boundary between the underhead portion and the underhead fillet by a certain distance L, an upper surface provided on a head portion side of the lower surface at a certain distance T from the lower surface, and the surface of the aluminum alloy bolt, and
an average crystal grain size of first crystal grains of an aluminum alloy constituting the curved region is larger than an average crystal grain size of second crystal grains of an aluminum alloy constituting an inner part of the underhead portion in a screw portion adjacent region adjacent to the screw portion.

2. The aluminum alloy bolt according to claim 1, wherein the average crystal grain size of the first crystal grains is 40 µm or more and 1000 µm or less.

3. The aluminum alloy bolt according to claim 1, wherein the average crystal grain size of the first crystal grains is 40 µm or more and 500 µm or less.

4. The aluminum alloy bolt according to any one of claims 1 to 3, wherein an angle formed by a major axis direction of the first crystal grains and the central axis C is 0° to 45°.

5. The aluminum alloy bolt according to claim 1, wherein the distance L is within a range of 0 ≤ L ≤ 1.5R (R is a height of the underhead fillet in the central axis C direction).

6. The aluminum alloy bolt according to claim 1, wherein the distance T is within a range of 0 < T ≤ R.

7. The aluminum alloy bolt according to claim 6, wherein the distance T is within a range of 0.5R ≤ T ≤ R.

8. The aluminum alloy bolt according to claim 1, wherein a height H parallel to the central axis C from a lower surface end at which the lower surface intersects the surface of the underhead portion to a top portion of the lower surface is within a range of 0 < H ≤ 3R.

9. The aluminum alloy bolt according to claim 8 wherein the height H is within a range of R ≤ H ≤ 2R.

10. An aluminum alloy bolt having a central axis C, the aluminum alloy bolt comprising:
a head portion;
an underhead portion extending downward from the head portion;
an underhead fillet formed between the head portion and the underhead portion; and
a screw portion formed in the underhead portion,
wherein an average crystal grain size of third crystal grains of an aluminum alloy constituting a screw portion adjacent region adjacent to the screw portion of the underhead portion is larger than an average crystal grain size of second crystal grains of an aluminum alloy constituting an inner part of the underhead portion in the screw portion adjacent region.

11. The aluminum alloy bolt according to claim 10, wherein the average crystal grain size of the third crystal grains is 40 µm or more and 1000 µm or less.

12. The aluminum alloy bolt according to claim 10, wherein the average crystal grain size of the third crystal grains is 40 µm or more and 500 µm or less.

13. The aluminum alloy bolt according to any one of claims 1 to 12, wherein the average crystal grain size of the second crystal grains is 1 µm or more and less than 40 µm.

14. The aluminum alloy bolt according to any one of claims 1 to 13, wherein the aluminum alloy is a 6000 series aluminum alloy or a 7000 series aluminum alloy.

15. A method for manufacturing an aluminum alloy bolt, the method comprising:
a step of preparing a rod material made of an aluminum alloy;
a step of producing an upsetting intermediate in which a large-diameter portion having a large diameter, a main body portion, and a tapered portion connecting the large-diameter portion and the main body portion are formed by performing upsetting on the rod material, and then applying plastic strain to the tapered portion;
a step of performing roller burnishing on the main body portion of the upsetting intermediate to produce a roller burnishing intermediate in which the plastic strain is applied to a surface of the main body portion and a vicinity of the surface;
a step of performing a heat treatment on the roller burnishing intermediate to coarsen crystal grains in the tapered portion and the main body portion to which the plastic strain is applied; and
a step of forming a screw in the main body portion of the roller burnishing intermediate after the heat treatment.

16. A method for manufacturing an aluminum alloy bolt, the method comprising:
a step of preparing a rod material made of an aluminum alloy;
a step of producing an upsetting intermediate in which a large-diameter portion having a large diameter, a main body portion, and a tapered portion connecting the large-diameter portion and the main body portion are formed by performing upsetting on the rod material, and then applying plastic strain to the tapered portion;
a step of performing a heat treatment on the upsetting intermediate to coarsen crystal grains in the tapered portion to which the plastic strain is applied; and
a step of forming a screw in the main body portion of the upsetting intermediate after the heat treatment.

17. A method for manufacturing an aluminum alloy bolt, the method comprising:
a step of preparing a rod material made of an aluminum alloy;
a step of producing an upsetting intermediate or an extrusion intermediate in which a large-diameter portion having a large diameter, a main body portion, and a tapered portion connecting the large-diameter portion and the main body portion are formed by performing upsetting or extrusion on the rod material, and then applying plastic strain to the tapered portion;
a step of annealing the upsetting intermediate or the extrusion intermediate to mitigate the plastic strain of the tapered portion;
a step of performing roller burnishing on a region where a screw is formed in the main body portion of the upsetting intermediate or the extrusion intermediate after the annealing to produce a roller burnishing intermediate in which the plastic strain is applied to a surface of the main body portion and a vicinity of the surface;
a step of performing a heat treatment on the roller burnishing intermediate to coarsen crystal grains in the main body portion to which the plastic strain is applied; and
a step of forming a screw in a region where a screw of the main body portion is formed.

18. A method for manufacturing an aluminum alloy bolt, the method comprising:
a step of preparing a rod material made of an aluminum alloy;
a step of producing an extrusion intermediate in which a large-diameter portion having a large diameter, a main body portion, and a tapered portion connecting the large-diameter portion and the main body portion are formed by performing extrusion on the rod material, and then applying plastic strain to the tapered portion;
a step of performing a heat treatment on the extrusion intermediate to coarsen crystal grains in the tapered portion to which the plastic strain is applied; and
a step of forming a screw in the main body portion of the extrusion intermediate after the heat treatment.

19. A method for manufacturing an aluminum alloy bolt, the method comprising:
a step of preparing a rod material made of an aluminum alloy;
a step of producing an extrusion intermediate in which a large-diameter portion having a large diameter, a main body portion, and a tapered portion connecting the large-diameter portion and the main body portion are formed by performing extrusion on the rod material, and then applying plastic strain to the tapered portion;
a step of performing roller burnishing on the main body portion of the extrusion intermediate to produce a roller burnishing intermediate in which the plastic strain is applied to a surface of the main body portion and a vicinity of the surface;
a step of performing a heat treatment on the roller burnishing intermediate to coarsen crystal grains in the tapered portion and the main body portion to which the plastic strain is applied; and
a step of forming a screw in the main body portion of the roller burnishing intermediate after the heat treatment.

20. The method for manufacturing an aluminum alloy bolt according to any one of claims 15 to 17, wherein
the aluminum alloy is a 7000 series aluminum alloy, and
an equivalent plastic strain ε applied to the tapered portion and/or the main body portion and a vicinity of the surface is 0 < ε ≤ 0.5.

21. The method for manufacturing an aluminum alloy bolt according to claim 20, wherein the equivalent plastic strain ε satisfies 0.05 ≤ ε ≤ 0.2.

22. The method for manufacturing an aluminum alloy bolt according to any one of claims 15, 16, 18, and 19, wherein
the aluminum alloy is a 6000 series aluminum alloy, and
an equivalent plastic strain ε applied to the tapered portion and/or the main body portion and a vicinity of the surface is 0.1 ≤ ε ≤ 0.5.

23. The method for manufacturing an aluminum alloy bolt according to claim 22, wherein the equivalent plastic strain ε satisfies 0.2 ≤ ε ≤ 0.4.
